## Europäisches Patentamt

## European Patent Office

## Office européen des brevets

(19)

(11) Veröffentlichungsnummer: **0 080 656**
**B1**

(12) **EUROPÄISCHE PATENTSCHRIFT**

(45) Veröffentlichungstag der Patentschrift:
**13.05.87**

(51) Int. Cl.⁴: **C 08 G 2/10**, C 08 G 2/30

(21) Anmeldenummer: **82110625.9**

(22) Anmeldetag: **18.11.82**

(54) **Kontinuierliches Verfahren zur Herstellung von Oxymethylenpolymeren.**

(30) Priorität: **28.11.81 DE 3147309**

(43) Veröffentlichungstag der Anmeldung:
**08.06.83 Patentblatt 83/23**

(45) Bekanntmachung des Hinweises auf die Patenterteilung:
**13.05.87 Patentblatt 87/20**

(84) Benannte Vertragsstaaten:
**DE FR GB IT NL**

(56) Entgegenhaltungen:
**CH - A - 455 291**
**DE - A - 3 207 773**
**DE - B - 1 244 408**
**GB - A - 1 049 001**
**US - A - 2 982 758**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,**
**Carl-Bosch-Strasse 38, D-6700 Ludwigshafen (DE)**

(72) Erfinder: **Sadlowski, Juergen, Dr., Edenkobener Strasse 3, D-6700 Ludwigshafen (DE)**
Erfinder: **Walter, Manfred, Dr., Hans-Purrmann-Allee 18, D-6720 Speyer (DE)**
Erfinder: **Hinselmann, Klaus, Robert-Koch-Strasse 25, D-6704 Mutterstadt (DE)**

## Beschreibung

Es ist bekannt, dass Oxymethylenpolymere durch kontinuierliche Massepolymerisation der Monomeren in Gegenwart kationisch wirkender Initiatoren hergestellt werden können. In der DE-B-1 161 421 und in den DE-A-1 495 228, 1 720 358 und 3 018 898 ist die Polymerisation von Trioxan in Knetern und Extrudern beschrieben, mit dem Ziel, das entstehende Oxymethylenpolymere bei möglichst hohen Umsätzen in Pulverform zu erhalten. Dabei wird bei Temperaturen unterhalb oder nur wenig oberhalb des Siedepunkts von Trioxan gearbeitet. Dies bedingt eine umständliche Verfahrensweise.

Der Erfindung lag die Aufgabe zugrunde, ein kontinuierliches Verfahren zur Massepolymerisation von Trioxan zu entwickeln, das einfach zu beherrschen und zu steuern ist, das ferner mit einem geringen Energieaufwand in einfachen Apparaturen durchführbar ist, und das schliesslich homogene Polymerisate mit gleichbleibender Produktqualität liefert.

Diese Aufgabe wird erfindungsgemäss dann gelöst, wenn bei der Massepolymerisation die Polymerisationsmischung in fluider Form vorliegt.

Das erfindungsgemässe Verfahren wird bevorzugt für die Homo- und die Copolymerisation von Trioxan angewandt. Als Monomeres kann aber grundsätzlich auch Tetroxan eingesetzt werden.

Als Comonomere können alle bei der Copolymerisation von Trioxan üblicherweise eingesetzten, copolymerisierbaren Verbindungen verwandt werden, wobei ihr Mengenanteil im allgemeinen 0,1 bis 15 und insbesondere 0,5 bis 5 Gew.-% der Gesamtmonomerenmenge beträgt. Als geeignete Comonomere seien genannt: cyclische Ether und besonders cyclische Acetale mit mindestens 2 benachbarten Kohlenstoffatomen und insbesondere 3 bis 9 Ringgliedern, z.B.
Ethylenoxid, Propylenoxid, Trimethylenoxid, Butadienoxid, 1,3-Dioxolan, Diethylenglykolformal, o-Xylenglykolformal, 1,4-Butandiolformal, Thiodiglykolformal oder 1,3-Oxthiolan sowie Gemische der genannten Verbindungen. Geeignete Comonomere sind ferner copolymerisierbare, olefinisch ungesättigte Verbindungen, wie Styrol, Isobutylen oder mit -COC-Gruppierungen in der Kette, insbesondere lineare Polyacetale, z.B. Polydioxolan. Die Molekulargewichte des Polymeren können gegebenenfalls durch die bei der Trioxanpolymerisation üblichen Regler auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden lässt, in Frage. Die Regler werden in Mengen von 10 bis 10 000 ppm, vorzugsweise von 100 bis 3000 ppm, eingesetzt.

Als Initiatoren werden vorzugsweise die bei der Trioxanpolymerisation üblichen kationischen Starter verwendet. Es eignen sich Protonensäuren, wie fluorierte oder chlorierte Alkyl- und Arylsulfonsäuren, z.B. Trifluormethansulfonsäure, Trifluormethansulfonsäureanhydrid oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Es versteht sich von selbst, dass nur solche Initiatoren verwendbar sind, die unter den Polymerisationsbedingungen ausreichend stabil sind. Die Initiatoren werden in Mengen von etwa 0,01 bis 1000 ppm, vorzugsweise 0,05 bis 10 ppm, eingesetzt. Im allgemeinen empfiehlt es sich, den Initiator in verdünnter Form zuzusetzen, vorzugsweise in Konzentrationen von 0,005 bis 5 Gew.-%. Als Lösungsmittel hierfür können inerte Verbindungen wie aliphatische, cycloaliphatische Kohlenwasserstoffe, halogenierte aliphatische Kohlenwasserstoffe, Glykolether usw. verwendet werden.

Monomere, Initiatoren und gegebenenfalls Regler können auf beliebige Weise vorgemischt oder auch getrennt voneinander dem Polymerisationsreaktor zugegeben werden. Trioxan wird zweckmässigerweise bereits in geschmolzener Form zugeführt. Der Polymerisationsreaktor kann als Extruder, Kneter, Rührkessel, Zahnradpumpe oder als Strömungsrohr mit oder ohne statische Mischerelemente ausgebildet sein. Der Polymerisationsreaktor ist beheiz- und kühlbar, wobei ihm auch ein Temperaturprofil aufgeprägt werden kann. Die Reaktion kann sowohl isotherm als auch adiabatisch geführt werden, da infolge der verhältnismässig niedrigen Polymerisationsenthalpie keine Probleme mit der Wärmezufuhr und Wärmeabführung auftreten. Zur Steuerung des Comonomereinbaus bei der Copolymerherstellung können entlang des Reaktors Comonomerdosierstellen vorgesehen sein. Auch Zusätze zur Modifizierung der Schlagzähigkeit der Oxymethylenpolymeren können so gezielt zudosiert werden.

Erfindungsgemäss sind Temperatur und Druck in der Polymerisationszone so zu wählen, dass Monomere und Polymerisat in geschmolzener Form, vorzugsweise in homogener Phase, vorliegen. Trioxan schmilzt bei 65 °C, sein Siedepunkt bei Normaldruck beträgt 115 °C. Da die Polymerisationstemperaturen höher liegen, muss die Polymerisation bei erhöhtem Druck ausgeführt werden, vorzugsweise zwischen 2 und 500 bar, insbesondere zwischen 5 und 50 bar. Unter den Reaktionsbedingungen steht das Trioxan im Gleichgewicht mit etwa 1 bis 5% Formaldehyd, der im geschlossenen System teilweise gasförmig vorliegen kann. Oxymethylenhomopolymerisat hat einen Schmelzpunkt von etwa 176 °C; bei Einbau verhältnismässig grosser Mengen Comonomerer kann der Schmelzpunkt bis auf etwa 150 °C sinken, durch nicht umgesetztes, im Polymeren gelöstes Trioxan kann er noch weiter erniedrigt werden. Die Massetemperatur im Polymerisationsreaktor sollte 300 °C nicht überschreiten, da sich bei derart hohen Temperaturen Oxymethylen-Polymere beschleunigt zersetzen. Der besonders bevorzugte Temperaturbereich beträgt 135 °C bis 200 °C.

Es hat sich gezeigt, dass der Polymerisationsumsatz umso höher liegt, je niedriger die Polymerisationstemperatur ist. Aus diesem Grund wird angestrebt, im homogen fluiden Bereich des Systems Polymer/Monomer bei möglichst niedriger Temperatur zu polymerisieren. Bei einer Polymerisationstemperatur von etwa 130 bis 135 °C fallen aus der homogenen Oxymethylenpolymerisat/Trioxan-Schmelze geringe Mengen feinteiliges Polymerisat aus, wenn ein Polymerisations-Umsatz von etwa 65% erreicht ist. Die dann vorliegende, fluide Suspension von festem Polymer in Polymer/Monomer-Schmelze ist noch gut förderbar, wenn sie nicht mehr als 10, vorzugsweise nicht mehr als 5 Gew.-% feste Anteile enthält, so dass die Vorteile der Erfindung gewahrt bleiben. Bei Durchführung der Polymerisation in Schnekkenreaktoren führt der durch Viskositätsanstieg infolge Suspensionsbildung bedingte, erhöhte Anfall von Dissipationsenergie zu einem Temperaturanstieg. Dies hat zur Folge, dass das ausgefallene Polymerisat – zumindest teilweise – wieder aufschmilzt und sich so eine quasi selbsttätige Einstellung des Systems im homogen/heterogen fluiden Grenzbereich ergibt. Dies gilt insbesondere in einem Temperaturbereich, bei der die Reaktormanteltemperaturen um bis zu ca. 30 °C unter der bevorzugten unteren Grenze von 135 °C für die Massetemperatur liegen.

Die Massetemperatur der Monomer/Polymer-Mischung lässt sich nur sehr schwer exakt messen; einen Anhaltspunkt liefert die Aussentemperatur des Polymerisationsreaktors. Wesentlich ist, dass das Polymerisat in fluider, vorzugsweise in homogener, geschmolzener Form anfällt. Es hat sich überraschenderweise gezeigt, dass entgegen Angaben in der Literatur (Angew. Chemie 79, 1967, Seite 512 sowie DE-B-1 161 421, Spalte 1, Zeilen 6 bis 22) auch oberhalb der Ceiling-Temperatur von 127 °C bei der Massepolymerisation von Trioxan ein hochmolekulares Polymer entsteht. Oxymethylenpolymere, die bei herkömmlichen kationischen Polymerisationsverfahren in fester Form anfallen, weisen eine bimodale Molekulargewichtsverteilung auf. Im Gegensatz dazu zeigen Oxymethylenpolymere, die bei dem erfindungsgemässen Polymerisationsverfahren in geschmolzener Form anfallen, eine unimodale Molekulargewichtsverteilung. Das Molekulargewicht der erfindungsgemäss hergestellten Oxymethylenpolymeren liegt vorzugsweise oberhalb von 10 000, insbesondere oberhalb von 20 000.

Die Verweilzeit der Polymerisationsmischung in der Polymerisationszone beträgt vorzugsweise 0,1 bis 20 min, insbesondere 0,4 bis 5 min. Die Polymerisation wird vorzugsweise bis zu einem Umsatz von mindestens 30%, insbesondere mehr als 60% geführt. Unter günstigen Bedingungen lassen sich auch Umsätze von bis zu 80% erzielen.

Bei der Herstellung von Oxymethylenhomopolymeren können die alkoholischen Endgruppen in flüssiger Phase direkt mit Epoxiden, Säureanhydriden oder Acetalen, gegebenenfalls nach Desaktivierung des Polymerisationskatalysators und Zusatz eines anderen Katalysators, ohne Mitverwendung von Lösungsmitteln zu thermisch stabilen Ether- oder Estergruppen umgesetzt werden.

Vorzugsweise wird direkt anschliessend an die Polymerisation die Polymerisationsmischung desaktiviert, entgast und konfektioniert, ohne dass eine Phasenänderung erfolgt. Das hat den Vorteil, dass das Polymerisat zum Konfektionieren nicht mehr aufgeschmolzen zu werden braucht, so dass das Verfahren energiesparend durchgeführt werden kann.

Die Desaktivierung der Katalysatorreste erfolgt durch Zugabe von Desaktivatoren zur Polymerisationsschmelze. Geeignete Desaktivatoren sind Ammoniak, aliphatische und aromatische Amine, Alkohole, basisch reagierende Salze, wie Soda und Borax, ferner auch Wasser. Sie werden den Polymeren in Mengen von vorzugsweise bis zu 1 Gew.-% zugesetzt.

Der Desaktivierungsreaktor ist gegenüber dem Polymerisationsreaktor räumlich so abgetrennt, dass die Polymer/Monomer-Schmelze ungehindert übertreten kann, das Eindringen der Desaktivatoren in den Polymerisationsreaktor aber sicher vermieden wird. Die Abtrennung erfolgt durch eingebaute Engpässe, die die Strömungsgeschwindigkeit der Schmelze lokal erhöhen, im Falle der Verwendung von Extrudern z.B. durch Stauelemente. Der Desaktivierungsreaktor ist so ausgebildet, dass die Polymer/Monomer-Schmelze in kurzer Zeit intensiv durchmischt wird. Dies wird bei Extrudern durch Einbau besonderer Knetelemente oder Rückmischelemente erreicht. Die Temperatur im Desaktivierungsreaktor liegt vorzugsweise bei 150 bis 300 °C, insbesondere 170 bis 250 °C. Es ist möglich, der Schmelze bereits im Desaktivierungsreaktor, bevorzugt zusammen mit den Desaktivatoren, Stabilisatoren zuzusetzen.

In dem anschliessenden Entgasungs- und Konfektionierreaktor findet der thermische Abbau der instabilen Kettenenden des Polymeren statt. Die dabei entstehenden Zersetzungsprodukte, insbesondere Formaldehyd, werden zusammen mit den nicht umgesetzten Monomeren durch Verdampfen entfernt. Dies erfolgt durch Druckabsenkung. In diesem Reaktor werden auch die üblichen Zusatzstoffe eingemischt, z.B. Licht- und Wärme-Stabilisatoren, Antioxydantien, Nucleierungsmittel, Farbstoffe, Pigmente, Gleitmittel und Füll- und Verstärkungsmittel, z.B. Glasfasern. Das fertige Oxymethylen-Polymere kann beim Austreten aus dem Konfektionierreaktor granuliert werden. Es zeigt gegenüber herkömmlich hergestellten Polymerisaten bessere mechanische Eigenschaften, z.B. bessere Zähigkeit und Steifigkeit, sowie eine grössere Homogenität, was sich in Stippenfreiheit äussert. Es ist für die üblichen Einsatzzwecke geeignet.

Die im Beispiel genannten Teile und Prozente beziehen sich auf das Gewicht.

Beispiel

Flüssiges Trioxan von 80 °C wird mit 2% Butandiolformal und 0,017% Methylal vermischt. Die Mischung wird auf 160 °C erwärmt, dann werden ihr 0,29 ppm Trifluormethansulfonsäure (als 0,004%ige Lösung in Diethylenglykoldimethylether) zugesetzt. Die Mischung wird in den Polymerisationsreaktor eingeführt, der aus einem Doppelschneckenextruder (ZSK 30 der Firma Werner + Pfleiderer) mit einem L:D-Verhältnis von 20 besteht. Der Reaktor ist auf 169°C beheizt, der Druck im Reaktor beträgt 4 bar, die Verweilzeit etwa 2 min. Die Schmelze tritt dann in den Desaktivierungsreaktor (im gleichen Extruder, getrennt durch Stauelemente) über. Dort werden ihr 0,55% Methyldiethanolamin zugesetzt. Die Verweilzeit beträgt hier etwa 0,2 min. Dann tritt die Schmelze in den Entgasungs- und Konfektionierreaktor ein, der von dem Desaktivierungsreaktor ebenfalls wieder durch Stauelemente abgetrennt ist. Bei einer Verweilzeit von etwa 3 min erfolgt bei 220°C der thermische Abbau. Nicht umgesetztes Trioxan und gebildete Nebenprodukte werden bei einem Druck von 0,01 bar abgezogen. Das fertige Polymerisat wird aus dem Extruder ausgepresst und granuliert. Der Umsatz, bezogen auf eingesetztes Monomeres, beträgt 69,2%. Das Granulat weist einen Schmelzindex MI (190°C, 2,16 kg) von 4 g/min und eine thermische Stabilität in Stickstoff (2 h, 220°C) von 99,8% auf.

## Patentansprüche

1. Kontinuierliches Verfahren zur Herstellung von Oxymethylenhomo- oder Copolymeren mit einem Molekulargewicht von mehr als 20 000 durch Massepolymerisation der Monomeren in einer Polymerisationszone mit Hilfe üblicher Initiatoren, ggf. in Gegenwart von Reglern, dadurch gekennzeichnet, dass während der Polymerisation die Polymerisationsmischung in geschmolzener Form vorliegt und im Anschluss an die Polymerisation das Polymerisat desaktiviert wird, ohne dass eine Phasenänderung erfolgt.

2. Kontinuierliches Verfahren zur Herstellung von Oxymethylenhomo- oder Copolymeren nach Anspruch 1, dadurch gekennzeichnet, dass im Anschluss an die Polymerisation und Desaktivierung das Polymerisat entgast und konfektioniert wird, ohne dass eine Phasenänderung erfolgt.

3. Kontinuierliches Verfahren zur Herstellung von Oxymethylenhomopolymeren nach Anspruch 1, dadurch gekennzeichnet, dass im Anschluss an die Polymerisation nach der Desaktivierung der Polymerisationsinitiatoren, das Polymere einer Verkappungsreaktion zur Herstellung thermisch stabiler Endgruppen unterworfen sind, ohne dass zwischen den Verfahrensstufen eine Phasenänderung erfolgt.

## Claims

1. A continuous process for the preparation of oxymethylene homopolymers or copolymers having a molecular weight of more than 20,000 by mass polymerization of the monomers in one polymerization zone with the aid of a conventional initiator, in the presence or absence of a regulator, wherein, during the polymerization, the polymerization mixture is present in molten form, and, directly after the polymerization, the polymer is deactivated, without a phase change taking place.

2. A continuous process for the preparation of oxymethylene homopolymers or copolymers, as claimed in claim 1, wherein, directly after the polymerization and deactivation, the polymer is devolatilized and compounded, without a phase change taking place.

3. A continuous process for the preparation of oxymethylene homopolymers, as claimed in claim 1, wherein, directly after the polymerization and after the deactivation of the polymerization initiator, the polymer is subjected to a blocking reaction to produce thermally stable end groups, without a phase change taking place between the procedural steps.

## Revendications

1. Procédé continu pour la préparation d'homo- ou de copolymères d'oxyméthylène d'un poids moléculaire de plus de 20 000, par polymérisation en masse des monomères dans une zone de polymérisation à l'aide d'initiateurs usuels, le cas échéant en présence de régulateurs, caractérisé en ce que pendant la polymérisation, le mélange de polymérisation se présente sous forme fondue et qu'à la suite de la polymérisation, le produit de polymérisation est désactivé sans que s'effectue un changement de phase.

2. Procédé continu pour la préparation d'homo- ou de copolymères d'oxyméthylène selon la revendication 1, caractérisé en ce qu'à la suite de la polymérisation et de la désactivation, le produit de polymérisation est dégazé et préparé sans que s'effectue un changement de phase.

3. Procédé continu pour la préparation d'homopolymères d'oxyméthylène selon la revendication 1, caractérisé en ce qu'à la suite de la polymérisation et après la désactivation des initiateurs de polymérisation, le polymère est soumis à une réaction de masquage pour la fabrication de groupes terminaux thermiquement stables, sans que s'effectue un changement de phase entre les différents stades du procédé.